# EUROPEAN PATENT SPECIFICATION

(11) **EP 0 722 049 B1**
(45) Date of publication and mention of the grant of the patent: **20.06.2001**
(21) Application number: 95309109.7
(22) Date of filing: 14.12.1995
(51) Int. Cl.: F16B 39/04, F16D 1/08, B60T 8/32

(54) **Screw threaded fastenings**
Gewindebefestigung
Fixation par vissage

(30) Priority: 12.01.1995 GB 9500623
(43) Date of publication of application: 17.07.1996
(73) Proprietor: JAGUAR CARS LIMITED, Allesley Coventry CV5 9DR (GB)
(72) Inventor: Adkins, David P., Chapelfields, Coventry CV5 8DA (GB); Ford, Mark, Bulkington, Nuneaton CV12 9LN (GB)
(74) Representative: Watts, Peter Graham

(56) References cited:
- DE-C- 4 128 508
- FR-A- 620 583
- FR-A- 1 309 948
- GB-A- 162 070
- GB-A- 586 816
- GB-A- 2 180 028
- GB-A- 2 235 268
- US-A- 1 367 336
- US-A- 2 395 234
- US-A- 4 917 003
- US-A- 4 969 694

## Description

The present invention relates to screw threaded fastenings and in particular to locking means for screw threaded fastenings.

In a conventional locking arrangement for screw threaded fastenings, a series of castellations are provided on a radial face of an internally threaded member and a pin is located through a diametrical bore in an externally threaded member to engage the castellations and thus prevent relative rotation of the internal and external threaded members.

This form of locking means presents no problems if the tool used to tighten the fastening, for example a spanner, provides open access to the end of the threaded fastening and the end of the threaded fastening is easily accessible, so that alignment of the diametrical bore with a gap between castellations can be observed and the pin may be introduced into the diametrical bore to lock the fastening.

However, if a closed tool for example a socket is used to tighten the fastening, the fastening must first be tightened to the required torque. The operator cannot however see the diametrical bore to align it with a gap between castellations, so that he must further tighten the fastening incrementally, removing the tool each time to see if the bore is aligned with a gap, so that the pin can be inserted. Furthermore, if the end of the fastening is unaccessible radially so that the pin cannot be inserted into the bore, this form of locking arrangement cannot be used.

FR-A-1309948 discloses a screw threaded fastener in which locking pin formations on one member are resiliently biased into engagement with grooves on another member. However, during rotation of said one member, the pin formations are retracted and the arrangement will not therefore solve the problem addressed by the present invention.

The present invention provides a modification to the above form of locking arrangement which will overcome these problems.

According to the present invention a screw threaded fastening comprises a first member with an external screw thread extending from one end thereof the threaded end of the first member having an axial bore to form a tubular portion and a second member with a corresponding internal screw thread; a pair of diametrically opposed radial bores being provided through the wall of the tubular portion of the first member, a corresponding axially extending radial aperture or recess being provided in the second member, so that when the screw threads of the first and second members engage and the second member is tightened on the first member, the radial bores may be aligned angularly with the aperture or recess; a pin assembly is provided, the pin assembly comprising a pair of pins mounted on resilient means, the pin assembly being located within the axial bore of the first member; wherein the resilient means comprises a 'U' or 'V' shaped spring element, the pins extending away from one another from the ends of the spring element when the pins are engaged in the radial bores, the pins being located in said radial bores and being urged by the resilient means outwardly towards said aperture or recess in the second member while one member is rotated relatively to the other, characterised in that the pins extend coaxially, and will spring into the aperture or recess in the second member preventing further relative rotation between the first and second members when the radial bores become aligned angularly with the aperture or recess.

With the above fastening, the first and second members may be screwed together and tightened to the required torque using a closed tool. The tool may then be removed and the pin of the pin assembly inserted into the radial bore so that it is biased into engagement with said other of the first and second members. The tool may then be reapplied to the second member and the second member tightened further until the radial bore aligns with the aperture or recess, when the pin will spring into the aperture or recess to lock the second member with respect to the first member.

To undo the fastening, the spring assembly is merely deformed so that the pin is moved radially clear of the radial bore and the pin assembly is removed.

This locking assembly only requires axial access to the fastening and may consequently be used where radial access is not readily available. The first member may be of solid construction having a closed axial bore which extends only for a sufficient length to permit the pin assembly to be located so that the pin engages in the transverse bore. Alternatively, the first member may be of tubular construction.

The present invention is now described by way of example only, with reference to the accompanying drawings, in which:-
Figure 1 is a cross-sectional elevation of a motor vehicle hub assembly with a combined nut and antilock brake sensing ring locked to the inner end of the hub in accordance with the present invention;
Figure 2 is an isometric view of the inner end of the hub assembly illustrated in Figure 1; and
Figure 3 is a sectional end elevation illustrating a modification to the assembly illustrated in Figure 1.

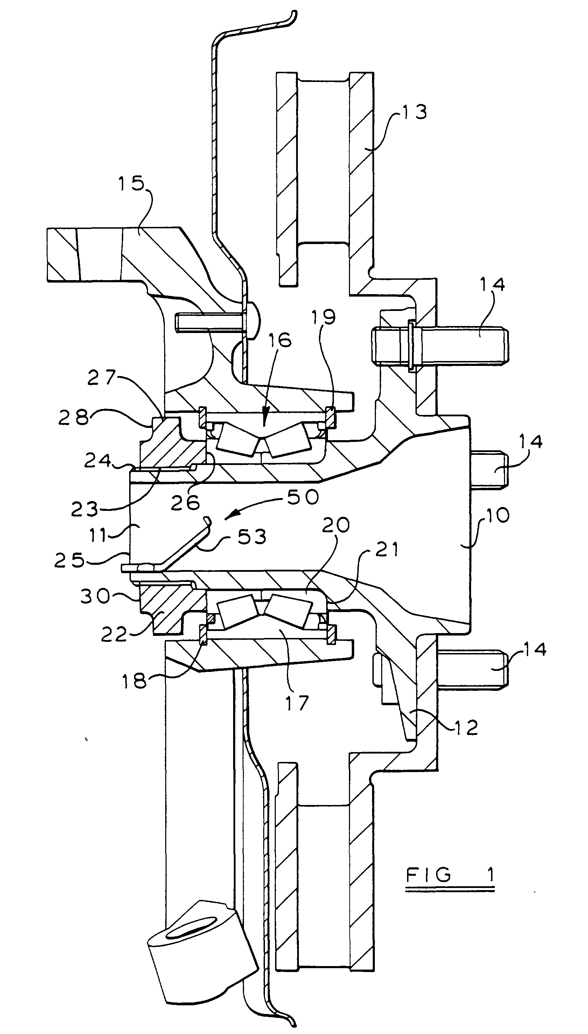

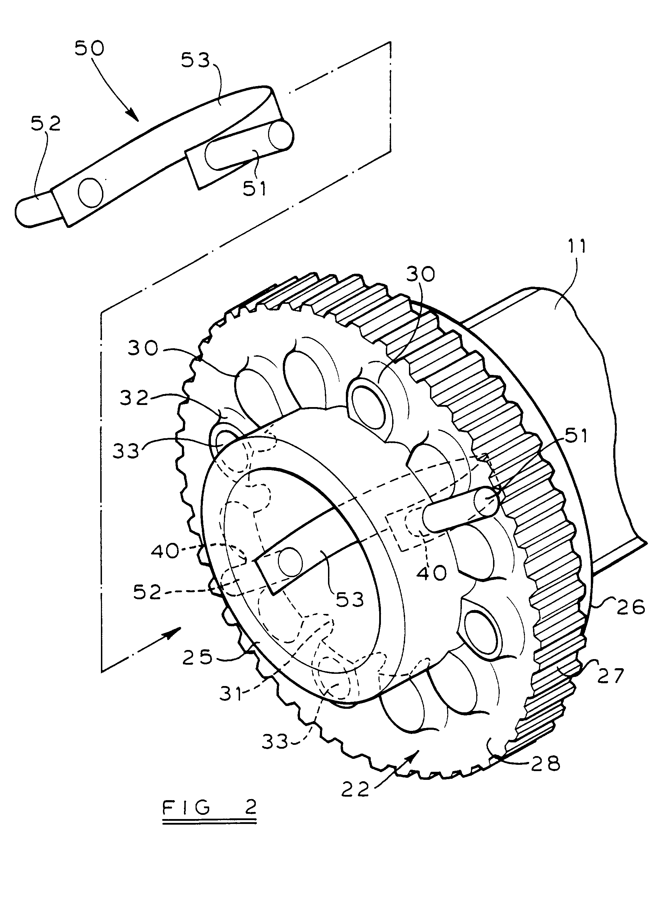

As illustrated in Figures 1 and 2, a hub 10 for a motor vehicle comprises a tubular portion 11 with outwardly extending flange 12 to which the brake disc 13 and wheel of the vehicle may be secured by means of a plurality of studs 14 in conventional manner, the flange 12 being provided at the outer end of the tubular portion 11.

The hub 10 is rotatably mounted in a suspension member 15 by means of a bearing assembly 16, the outer race 17 of the bearing 16 being located axially with respect to the suspension member 15 between a pair of circlips 18 and 19.

The inner race 20 of the bearing 16 is located on the tubular portion 11 of the hub 10, between a radial face 21 adjacent to the flange 12 and an antilock braking system sensor ring 22.

The antilock sensor ring 22 has an internal screw thread 23 which threadably engages a corresponding screw thread 24 on the external diameter of the tubular portion 11 of hub 10, the screw thread 24 being at the end 25 of the tubular portion 11 which is remote from flange 12. The outer end 26 of the sensor ring 22 forms an annular abutment which may be tightened against the inner end of the inner race 20 of bearing 16, to clamp the inner race 20 against the radial face 21 of the hub 10. The inner portion of the sensor ring 22 defines a series of angular spaced teeth 27 movement of which may be sensed by a suitable inductive pickup (not shown) to monitor the speed of rotation of the hub 10.

The inner end face 28 of the sensor ring 22 is provided with a series of angularly spaced axially extending castellations 30. The bases 31 of the gaps 32 between castellations are radiussed. Axially extending apertures 33 are provided in four of the castellations 30, these apertures 33 being regularly spaced angularly.

A transverse bore 40 is provided through the tubular portion 11 of hub 10 adjacent the inner end 25 thereof, the bore 40 penetrating the wall of the tubular portion 11 at diametrically opposed locations. The bore 40 is located such that when sensor ring 22 is tightened against the inner race 20 of bearing 16 to the required torque, the bore 40 will be located axially between the inner face 28 of sensor ring 22 and the end faces of the castellations 30, the diameter of the bore 40 being less than the width of the gaps 32 between successive castellations 30.

A pin assembly 50 comprises a pair of pins 51 and 52 which are secured to opposite ends of a "U" or "V" shaped spring element 53, the pins 51 and 52 extending coaxially of one another, outwardly from the spring element 53. The spring element 53 is dimensioned to fit within the bore of the tubular portion 11 of hub 10, transversely thereof. Spring 53 is compressible to permit the pins 51 and 52 to pass inside the bore of the tubular portion 11, so that each pin 51, 52 may be located in the adjacent portion of the diametrical bore 40 through the wall of the tubular portion 11. The spring element 53 biases the pins 51 and 52 outwardly, so that they will extend through the wall and beyond the external diameter of the tubular portion 11.

To assemble the hub 10, the bearing 16 is pressed into the suspension member 15 and is located axially thereof by circlips 18 and 19. The tubular portion 11 of the hub 10 is then located through the bearing 16 until the radial face 21 abuts the outer end of the inner race 20. The sensor ring 22 is then secured to the inner end of tubular portion 11 and is tightened to the required torque against the inner end of inner race 20, using a tool in the form of a cup with axially extending pins which engage in the axially extending apertures 33.

Once the ring 22 has been tightened to the required torque, the tool is removed and the spring assembly is compressed so that it may be introduced into the bore of the tubular portion 11 of hub 10, transverse thereto. The pins 51 and 52 are then located in opposite portions of the bore 40 from within the tubular portion 11, so that upon release of the spring element 53, the pins will be urged outwardly into the bore 40. If the bore 40 is aligned with gaps 32 between castellations 30, the pins 51 and 52 will extend through the aperture 40 and out between the castellations 30 to lock the ring 22 with respect to the hub 10. If, on the other hand, the bore 40 is not aligned with gaps 32, then the castellations 30 will prevent the pins 51 and 52 from emerging outwardly from the bore 40. In such circumstances, the tool may be re-engaged with the ring 22 and the ring 22 tightened further until gaps 32 are aligned with the bore 40, when the pins 51 and 52 will spring out under the load applied by spring element 53, the pins thus locking the ring 22.

To remove the ring 22, the spring 53 may be compressed to retract the pins 51 and 52, so the pin assembly 51, 52, 53 may be removed from the tubular member 11. The ring 22 may then be unscrewed from the tubular portion 11 of hub 10.

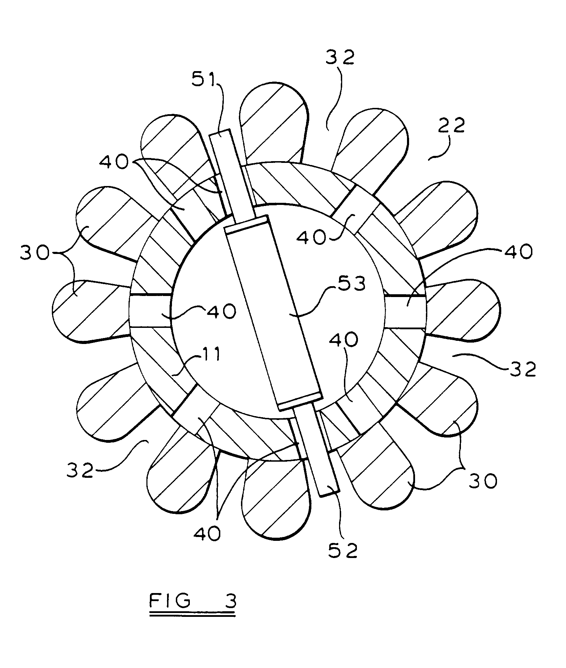

With the above embodiment, the degree to which the ring 22 must be overtightened to bring the bore 40 into alignment with a gap 32 between castellations 30 will depend on the spacing between the castellations 30. In order to reduce the amount of overtightening required, a plurality of diametric bores 40 may be provided through the tubular portion 11 of the hub 10 as illustrated in Figure 3. The bores 40 are spaced angularly about the hub 10 at different angular separations to the castellations 30 so that the angular misalignment between the bores 40 and the nearest gaps 32 will vary. Once the ring 22 has been tightened to the required torque, the pin assembly 50 may then be located in the bore 40 which is nearest to alignment with a gap 32, thereby minimising the overtightening required to lock the ring 22.

In the embodiment illustrated the ring 22 has twelve castellations which are spaced evenly around the ring 22 at 30° intervals. The bores 40 in the hub 10 are located at 0°; 52.5°; 105° and 128°.

While in the above embodiment the pin assembly is formed from pins which are formed separately and are secured to the spring element in suitable manner. In an alternative embodiment the pin or pins may be formed integrally of the resilient means, for example the resilient means may be formed from wire, the ends of the wire forming the pins.

## Claims

1. A screw threaded fastening comprising a first member (10) with an external screw thread (24) extending from one end (25) thereof the threaded end of the first member (10) having an axial bore to form a tubular portion (11) and a second member (22) with a corresponding internal screw thread (23); a pair of diametrically opposed radial bores (40) being provided through the wall of the tubular portion (11) of the first member (10), a corresponding axially extending radial aperture or recess (32) being provided in the second member (22), so that when the screw threads (24, 23) of the first and second members (10, 22) engage and the second member (22) is tightened on the first member (10), the radial bores (40) may be aligned angularly with the aperture or recess (32); a pin assembly (52) is provided, the pin assembly (50) comprising a pair of pins (51,52) mounted on resilient means (53), the pin assembly (50) being located within the axial bore of the first member (10), wherein the resilient means (53) comprises a 'U' or 'V' shaped spring element, the pins (51,52) extending away from one another from the ends of the spring element when the pins (51,52) are engaged in the radial bores (40), the pins (51,52) being located in said radial bores (40) and being urged by the resilient means (53) outwardly towards said aperture or recess (32) in the second member (22) while one member is rotated relatively to the other, characterised in that the pins (51,52) extend coaxially, and will spring into the aperture or recess (32) in the second member (22) preventing further relative rotation between the first and second members (10, 22) when the radial bores (40) become aligned angularly with the aperture or recess (32).

2. A screw threaded fastening according to claim 1 characterised in that a plurality of apertures or recesses (32) are angularly spaced around the circumference of said tubular portion (11) of said first member (10).

3. A screw threaded fastening according to claim 1 or 2 characterised in that a plurality of said pairs of radial bores (40) are provided at angularly spaced locations in said tubular portion (11) of said first member (10).

4. A screw threaded fastening according to claim 3 characterised in that the angular spacing of the radial bores (40) is different from the angular spacing of the apertures or recesses (32).

5. A screw threaded fastening according to claim 3 or 4 characterised in that the angular spacing of the radial bores (40) varies.

6. A screw threaded fastening according to any one of the preceding claims characterised in that the second member (22) is provided with castellations (30) on a radial face (28), the apertures or recesses (32) being provided by the gaps between the castellations (30), the pin assembly (50) being compressible along the common axis of the pins (51, 52) to permit insertion of the pin assembly (50) into the axial bore and location of the pins (51, 52) in the opposite ends of the diametrical bore (40).

7. A screw threaded fastening according to claim 6 characterised in that the pairs of diametrically opposed bores (40) are located at 0°; 52.5°; 105°; and 128°.

8. A screw threaded fastening according to claim 6 or 7 characterised in that the first member (10) comprises a hub of a motor vehicle, tubular portion (11) with an outwardly directed flange formation (12) at its outer end, the external screw thread (24) extending from the inner end of the tubular portion (11); a second member (22) comprising a ring which is adapted to clamp the inner race of a bearing (16) against a radial face (21) of the first member (10).

9. A screw threaded fastening according to claim 8 characterised in that the ring (22) forms an anti-lock braking system sensor ring, having a series of angularly spaced teeth (27) on its external diameter.

10. A screw threaded fastening according to claim 8 or 9 characterised in that apertures (33) are provided on the inner end face (28) of the ring (22) for engagement by a tool for rotation of the ring (22) relative to the hub (10).

## Patentansprüche

1. Eine Befestigung mit Schraubgewinde, die ein erstes Bauteil (10) mit äußerem, sich von einem Ende (25) davon erstreckenden Gewinde (24) umfaßt, wobei das mit Gewinde versehene Ende des ersten Bauteils (10) eine axiale Bohrung aufweist, um einen röhrenförmigen Abschnitt (11) zu schaffen; und ein zweites Bauteil (22) mit entsprechendem, inneren Gewinde (23); wobei durch die Wand des röhrenförmigen Abschnitts (11) des ersten Bauteils (10) hindurch ein Paar von sich diametral gegenüberliegenden Bohrungen (40) bereitgestellt wird, und im zweiten Bauteil (22) eine entsprechende, sich axial erstreckende Öffnung oder Vertiefung (32) bereitgestellt wird; so daß die radialen Bohrungen (40) im Winkel mit der Öffnung oder der Vertiefung (32) ausgerichtet werden können, wenn die Gewinde (24, 23) der ersten und zweiten Bauteile (10, 22) eingreifen und das zweite Bauteil (22) auf dem ersten Bauteil (10) angezogen wird; und es wird ein Stiftaufbau (50) bereitgestellt, wobei der Stiftaufbau (50) ein Paar - auf einer federnden Vorrichtung (53) montierte - Stifte (51, 52) aufweist, und der Stiftaufbau (50) innerhalb der axialen Bohrung des ersten Bauteils (10) angeordnet wird; und worin die federnde Vorrichtung (53) ein "U"- oder "V"-förmiges Federbauteil umfaßt, und die Stifte (51, 52) sich von den Enden des Federbauteils voneinander weg erstrecken, wenn die Stifte (51, 52) in diesen radialen Bohrungen (40) eingreifen, die Stifte (51, 52) in diesen radialen Bohrungen (40) angeordnet sind und durch die federnde Vorrichtung (53) nach außen in Richtung auf diese Öffnung oder diese Vertiefung (32) in diesem zweiten Bauteil (22) hin gezwungen werden, während ein Bauteil relativ zum anderen gedreht wird; dadurch gekennzeichnet daß sich die Stifte (51, 52) koaxial erstrecken und in die Öffnung oder Vertiefung (32) in dem zweiten Bauteil (22) hineinspringen werden, was eine weitere, relative Drehung zwischen den ersten und zweiten Bauteilen (10, 22) verhindert, wenn die radialen Bohrungen (40) im Winkel mit der Öffnung oder der Vertiefung (32) ausgerichtet werden.

2. Eine Befestigung mit Schraubgewinde nach Anspruch 1, dadurch gekennzeichnet daß eine Mehrzahl von Öffnungen oder Vertiefungen (32) in winkeligem Abstand um den Umfang dieses röhrenförmigen Abschnitts (11) dieses ersten Bauteils (10) angeordnet sind.

3. Eine Befestigung mit Schraubgewinde nach Anspruch 1 oder 2, dadurch gekennzeichnet daß eine Mehrzahl dieser Paare von radialen Bohrungen (40) an winkelig voneinander entfernten Orten in diesem röhrenförmigen Abschnitt (11) dieses ersten Bauteils (11) bereitgestellt werden.

4. Eine Befestigung mit Schraubgewinde nach Anspruch 3, dadurch gekennzeichnet daß der Winkelabstand der radialen Bohrungen (40) vom Winkelabstand der Öffnungen oder Vertiefungen (32) verschieden ist.

5. Eine Befestigung mit Schraubgewinde nach Anspruch 3 oder 4, dadurch gekennzeichnet daß der Winkelabstand der radialen Bohrungen (40) variiert.

6. Eine Befestigung mit Schraubgewinde nach einem der vorstehenden Ansprüche, dadurch gekennzeichnet daß das zweite Bauteil (22) mit Kronen (30) auf einer radialen Fläche (28) bereitgestellt wird, die Öffnungen oder Vertiefungen (32) durch die Lücken zwischen diesen Kronen (30) bereitgestellt werden, und der Stiftaufbau (50) entlang einer gemeinsamen Achse der Stifte (51, 52) zusammenpreßbar ist, um das Einsetzen des Stiftaufbaus (50) in die axiale Bohrung und die Anordnung der Stifte (51, 52) in entgegengesetzten Enden der diametralen Bohrung (40) zu erlauben.

7. Eine Befestigung mit Schraubgewinde nach Anspruch 6, dadurch gekennzeichnet daß die Paare von diametral gegenüberstehenden Bohrungen (40) bei 0°, 52.5°, 105° und 128° angeordnet sind.

8. Eine Befestigung mit Schraubgewinde nach Anspruch 6 oder 7, dadurch gekennzeichnet daß das erste Bauteil (10) eine Radnabe eines Motorfahrzeuges, einen röhrenförmigen Abschnitt (11) mit einer nach außen gerichteten Flanschbildung (12) an seinem äußeren Ende, und ein sich vom inneren Ende des röhrenförmigen Abschnittes (11) erstreckendes, äußeres Schraubgewinde (24) aufweist; und wobei ein zweites Bauteil (22) einen Ring umfaßt, welcher angepaßt ist um den inneren Laufring eines Lagers (16) gegen die radiale Fläche des ersten Bauteils (10) zu klammern.

9. Eine Befestigung mit Schraubgewinde nach Anspruch 8, dadurch gekennzeichnet daß der Ring (22) einen Sensorring für ein Antiblockier-Bremssystem bildet, der eine Reihe von in winkeligem Abstand angeordneten Zähnen (27) auf seinem äußeren Durchmesser besitzt.

10. Eine Befestigung mit Schraubgewinde nach Anspruch 8 oder 9, dadurch gekennzeichnet daß - für den Angriff eines Werkzeuges zur Drehung von Ring (22) relativ zur Radnabe (10) - auf der inneren Endfläche (28) des Rings (22) Öffnungen (33) gebildet sind.

## Revendications

1. Fixation à filetage comprenant un premier élément (10) muni d'un filet de vis externe (24) s'étendant depuis une extrémité (25) de celui-ci, l'extrémité filetée du premier élément (10) comportant un alésage axial en vue de réaliser une partie tubulaire (11) et un second élément (22) muni d'un filet de vis interne correspondant (23), une paire d'alésages radiaux diamétralement opposés (40) étant ménagée au travers de la paroi de la partie tubulaire (11) du premier élément (10), une ouverture ou un évidement radial s'étendant axialement correspondant (32) étant ménagé dans le second élément (22), de sorte que lorsque les filets de vis (24, 23) des premier et second éléments (10, 22) se mettent en prise et que le second élément (22) est serré sur le premier élément (10), les alésages radiaux (40) peuvent être alignés de façon angulaire avec l'ouverture ou l'évidement (32), un ensemble de broches (50) est prévu, l'ensemble de broches (50) comprenant une paire de broches (51, 52) montées sur un moyen élastique (53), l'ensemble de broches (50) étant positionnées à l'intérieur de l'alésage axial du premier élément (10),
dans laquelle le moyen élastique (53) comprend un élément de ressort en forme de "U" ou "V", les broches (51, 52) s'étendant à l'écart l'une de l'autre à partir des extrémités de l'élément de ressort lorsque les broches (51, 52) sont mises en prise dans les alésages radiaux (40), les broches (51, 52) étant situées dans lesdits alésages radiaux (40) et étant sollicitées par le moyen élastique (53) vers l'extérieur vers ladite ouverture ou l'évidement (32) dans le second élément (22) tandis que le premier élément est entraîné en rotation par rapport à l'autre, caractérisée en ce que les broches (51, 52) s'étendent de façon coaxiale, et sautercnt dans l'ouverture ou l'évidement (32) du second élément (22) en empêchant une rotation relative supplémentaire entre les premier et second éléments (10, 22) lorsque les alésages radiaux (40) deviennent alignés de façon angulaire avec l'ouverture ou l'évidement (32).

2. Fixation à filetage selon la revendication 1, caractérisée en ce qu'une pluralité d'ouvertures ou d'évidements (32) sont espacés de façon angulaire autour de la circonférence de ladite partie tubulaire (11) dudit premier élément (10).

3. Fixation à filetage selon la revendication 1 ou 2, caractérisée en ce qu'une pluralité desdites paires d'alésages radiaux (40) sont disposés à des emplacements espacés angulairement dans ladite partie tubulaire (11) dudit premier élément (10).

4. Fixation à filetage selon la revendication 3, caractérisée en ce que l'espacement angulaire des alésages radiaux (40) est différent de l'espacement angulaire des ouvertures ou des évidements (32).

5. Fixation à filetage selon la revendication 3 ou 4, caractérisée en ce que l'espacement angulaire des alésages radiaux (40) varie.

6. Fixation à filetage selon l'une quelconque des revendications précédentes, caractérisée en ce que le second élément (22) est muni de parties crénelées (30) sur une face radiale (28), les ouvertures ou les évidements (32) étant formés par les interstices entre les parties crénelées (30), l'ensemble de broches (5C) étant compressible le long de l'axe commun des broches (51, 52) en vue de permettre l'insertion de l'ensemble de broches (50) dans l'alésage axial et l'emplacement des broches (51, 52) dans les extrémités opposées de l'alésage diamétral (40).

7. Fixation à filetage selon la revendication 6, caractérisée en ce que les paires d'alésages diamétralement opposés (40) sont situées à 0°, 50,5°, 105°, et 128°.

8. Fixation à filetage selon la revendication 6 ou 7, caractérisée en ce que le premier élément (10) comprend un moyeu d'un véhicule à moteur, une partie tubulaire (11) munie d'une structure de bride dirigée vers l'extérieur (12) à son extrémité extérieure, le filet de vis externe (24) s'étendant à partir de l'extrémité intérieure de la partie tubulaire (11), un second élément (22) comprenant une couronne qui est adaptée pour serrer la face intérieure d'un roulement (16) contre une face radiale (21) du premier élément (10).

9. Fixation à filetage selon la revendication 8, caractérisée en ce que la couronne (22) constitue une couronne de capteur de système de freinage anti-bloquant, comportant une série de dents espacées angulairement (27) sur son diamètre externe.

10. Fixation à filetage selon la revendication 8 ou 9, caractérisée en ce que des ouvertures (33) sont ménagées sur la face d'extrémité intérieure (28) de la couronne (22) en vue d'une mise en prise par un outil en vue d'une rotation de la couronne (22) par rapport au moyeu (10).
